# EUROPÄISCHE PATENTSCHRIFT

(11) **EP 3 077 186 B1**
(45) Veröffentlichungstag und Bekanntmachung des Hinweises auf die Patenterteilung: **24.04.2019**
(21) Anmeldenummer: 14790530.1
(22) Anmeldetag: 09.10.2014
(51) Int. Cl.: B29D 30/06, B29C 33/10

(54) **VULKANISIERFORM FÜR WINTER- UND ALLWETTER-FAHRZEUGREIFEN UND VERFAHREN ZUR HERSTELLUNG DER VULKANISIERFORM**
VULCANIZING MOULD FOR WINTER AND ALL-SEASON VEHICLE TYRES AND METHOD FOR PRODUCING THE VULCANIZING MOULD
MOULE DE VULCANISATION POUR PNEUMATIQUES TOUTES SAISONS ET D'HIVER POUR VÉHICULE AUTOMOBILE ET PROCÉDÉ DE FABRICATION DU MOULE DE VULCANISATION

(30) Priorität: 06.12.2013 DE 102013225160
(43) Veröffentlichungstag der Anmeldung: 12.10.2016
(73) Patentinhaber: Continental Reifen Deutschland GmbH, 30165 Hannover (DE)
(72) Erfinder: CIPTOKUSUMO, Joharsyah, 30165 Hannover (DE); HASSELLÖF, Magnus, 30161 Hannover (DE); DREWS, Marko, 30173 Hannover (DE)
(74) Vertreter: Finger, Karsten
(86) Internationale Anmeldenummer: PCT/EP2014/071617
(87) Internationale Veröffentlichungsnummer: WO 2015/082102

(56) Entgegenhaltungen:
- EP-A1- 0 548 703
- EP-A1- 1 529 627
- EP-A1- 2 095 931
- DE-A1-102012 104 500
- JP-A- H05 138 762
- JP-A- H11 179 730
- JP-A- 2002 264 145
- JP-A- 2008 044 155
- JP-A- 2011 104 819

## Beschreibung

Die Erfindung betrifft eine Vulkanisierform für Winter- und Allseason-Fahrzeugreifen, welche innenseitig Formflächen mit einem Negativ-Laufstreifenprofil mit Negativ-Profilelementen zur Formung des Positiv-Laufstreifenprofils mit Positiv-Profilelementen des zu vulkanisierenden Fahrzeugreifens aufweist, wobei in den Negativ-Profilelementen Lamellenbleche angeordnet sind, welche in den Positiv-Profilelementen des zu vulkanisierenden Fahrzeugreifens Feineinschnitte erzeugen und wobei innerhalb eines Schulter-Negativ-Profilelementes wenigstens ein Entlüftungsschlitz als Entlüftungsmittel angeordnet ist, wobei dieser Entlüftungsschlitz parallel und beabstandet zu einem in diesem Schulter-Negativ-Profilelement angeordneten Lamellenblech verläuft.

Eine derartige Vulkanisierform ist in der bislang unveröffentlichten DE 10 2012 104 500 beschrieben. Die Entlüftungsschlitze sind innerhalb der Negativ-Formfläche des Profils die einzigen Entlüftungsmittel, durch die die Luft aus dem Formenhohlraum nach außen ausleitbar ist. Auf bisher übliche zylindrische Entlüftungsmittel, wie beispielsweise in der DE 195 43 276 A1 offenbarte sogenannte "Eurovents" ist verzichtet. Mit der vorgenannten Vulkanisierform ist das aufwändige und teure Reinigen bzw. Auswechseln von verstopften zylindrischen Entlüftungsmitteln vermieden. Der mit der vorgenannten Vulkanisierform heizgepresste Reifen, der vorzugsweise vorvernetzt war, weist in einem Laufstreifenbereich, der axial innen in Bezug auf die Schulter-Profilblockelemente angeordnet ist, eine hervorragende Fertigungsqualität auf. Jedoch ist die Entlüftung in den Schulter-Profilelementen und in einem ringkreisförmigen Bereich, der axial außen in Bezug auf die Schulter-Profilelemente liegt, noch verbesserungswürdig.

Es ist allgemein bekannt, Entlüftungsmittel in Vulkanisierformen vorzusehen, welche mit der Atmosphäre in Verbindung stehen. Diese leiten die beim Heizpressvorgang des Reifenrohlings zwischen dem Reifenrohling und den Formflächen verbleibende Luft während des Pressvorganges des Reifenrohlings an die Formflächen aus dem Formenhohlraum nach außen aus. Es sollen unerwünschte Fehlstellen in Form von Unebenheiten an der Oberfläche des Reifens vermieden werden. Während des Heizpressvorganges bekommt der Reifenrohling seine endgültige Kontur und wird durch Kautschukvemetzungsreaktionen in seinen gummielastischen Zustand überführt.

Es ist die Aufgabe der vorliegenden Erfindung, eine Vulkanisierform für Fahrzeugreifen mit Entlüftungsmitteln bereitzustellen, welche die Luft aus dem Formenhohlraum sicher ableiten und mit welcher ein Fahrzeugreifen zu fertigen ist, der insbesondere auch in seinem Schulterbereich eine hervorragende Fertigungsqualität aufweist.

Diese Aufgabe wird nach Anspruch 1 gelöst, indem nur axial außen in Bezug auf diesen innerhalb eines Schulter-Negativ-Profilelementes angeordneten Entlüftungsschlitz zusätzlich wenigstens ein zylindrisches Entlüftungsmittel angeordnet.

Der Schulterbereich eines Reifens ist besonders schwierig zu entlüften. Da die Entlüftungsschlitze nur in Negativ-Profilelementen angeordnet sind, sind zusätzliche zylindrische Entlüftungsmittel, die axial außen in Bezug auf den axial äußersten Entlüftungsschlitz angeordnet sind, eine effektive Maßnahme, um eine hervorragende Fertigungsqualität des heizgepressten Reifens zu erreichen. Die zusätzlichen Entlüftungsmittel unterstützen im kritischen Schulterbereich des Reifens die Entlüftung dort, wo aufgrund konstruktiver Gegebenheiten keine Entlüftungsschlitze mehr angeordnet werden können. Dieses trifft sowohl axial außen innerhalb eines Schulter-Negativ-Profilblockes als auch axial außen in Bezug auf diesen Schulter-Negativ-Profilblock im sogenannten "TWI-Bereich", zu.

"TWI-Bereich" meint denjenigen Bereich, der zwischen dem Profilring und dem Wulstring einer vollständigen Reifenvulkanisierform angeordnet ist. In dem TWI-Bereich ist das Hinweissymbol angeordnet, welches den Verbraucher auf den korrespondierenden Abriebindikator im Reifenprofil hinweist.

"Lamellenblech" meint auch diejenigen Elemente, die Feineinschnitte in Profilelemente des heizzupressenden Reifens prägen, die nicht aus Blech, sondern beispielsweise durch schichtaufbauende Verfahren hergestellt sind.

Vorteilhaft ist es, wenn das zylindrische Entlüftungsmittel innerhalb des Profilelementes auf einer gedachten Linie, welche eine Verlängerung der Längserstreckung des Entlüftungsschlitzes ist, angeordnet ist.

Zweckmäßig ist es, wenn das zylindrische Entlüftungsmittel axial außen in Bezug auf das Schulter-Negativ-Profilelement angeordnet ist.

Vorteilhaft ist es, wenn das zylindrische Entlüftungsmittel axial außen in Bezug eine Querrille in deren Mündung in den TWI-Bereich in der Reifenschulter angeordnet ist.

Durch die vorgenannten Anordnungen der zylindrischen Entlüftungsmittel ist sichergestellt, dass die Entlüftungsfunktion in dem für die Entlüftung kritischen Bereich sichergestellt sowie optimiert ist.

Zweckmäßig ist es, wenn die axial innen in Bezug auf die Schulter-Negativ-Profilelemente angeordneten Negativ-Profilelemente ausschließlich Entlüftungsschlitze als Entlüftungsmittel aufweisen. Die Entlüftungsschlitze ersetzen die zylindrischen Entlüftungsventile, wodurch die Wartungskosten für die Vulkanisierform geringer sind.

Vorteilhaft ist es, wenn der Entlüftungsschlitz eine Breite von 25 µm bis 70 µm, vorzugsweise von 30 µm bis 60 µm aufweist. Die Breite des Entlüftungsschlitzes bemisst sich senkrecht zu seiner Längserstreckung. Die vorgenannte Breite gewährt eine ausreichende Entlüftung, jedoch wird das Eindringen von Kautschukmaterial des Reifens in den Entlüftungsschlitz vermieden, so dass am heizgepressten Reifen keine bzw. kaum Austriebe entstehen. Zudem verschmutzt oder verstopft der Entlüftungsschlitz nicht bzw. kaum.

Zweckmäßig ist es, wenn der Entlüftungsschlitz eine Länge von 10 mm bis 40 mm aufweist, damit das neue Entlüftungskonzept flexibel konstruiert werden kann. Der Entlüftungsschlitz kann dabei unterschiedliche Gestalt aufnehmen.

Um eine gute Entlüftung zu gewährleisten ist es vorteilhaft, wenn die Entlüftungsschlitze zwischen Lamellenblechen und parallel zu diesen angeordnet sind, wobei sich vorzugsweise ein Entlüftungsschlitz mit einem Lamellenblech in ihrer Anordnung abwechselt. Die Entlüftungsschlitze sind beabstandet zu den Lamellenblechen angeordnet. Die Entlüftung einer Winter- oder Allseasonreifen-Vulkanisierform stellt aufgrund der bis zu 6000 angeordneten Lamellenblechen eine Herausforderung dar, da die Abführung der Luft aus den Zwischenräumen zwischen den Lamellenblechen schwierig ist, weil die Lamellenbleche die Luftabführung behindern. Daher ist die Anordnung der Entlüftungsschlitze zwischen diesen Lamellenblechen und parallel zu diesen sehr vorteilhaft, um eine ausreichende Luftabführung zu gewährleisten. Es ist ein Reifen heizzupressen, der eine hochqualitative Oberflächenanmutung aufweist. Eurovents und/oder andere Entlüftungskanäle sind im Bereich der Lamellenbleche nicht erforderlich.

Vorteilhaft ist es, wenn der Entlüftungsschlitz in Richtung radial außen (zur Außenseite der Vulkanisierform hin) in einen Entlüftungskanal mündet, dessen Querschnittsfläche größer als die Querschnittsfläche des Entlüftungsschlitzes ist, dessen Durchmesser 2 mm bis 3 mm beträgt und dessen Querschnitt vorzugsweise rund ist. Hierdurch kann bei einer anstehenden Reinigung der Vulkanisierform der Entlüftungsspalt leicht von der Außenseite her ausgeblasen werden, wobei ein bestehender Gummirest als Pfropfen rückstandsfrei ausgetrieben werden kann.

Zweckmäßig ist es, wenn der Entlüftungsschlitz über seine Längserstreckung, vorzugsweise über seine Längserstreckung und über seine Tiefenerstreckung, die gleiche Breite aufweist, damit unterschiedliche Schlitzanordnungen auf der Formoberfläche ermöglicht werden können (um den angemessenen Entlüftungsumfang zu erfüllen) und eine Entlüftungsbohrung von der Hinterseite der Form gezielt angesetzt werden kann.

In einer bestimmten Ausführungsform enden die beiden Enden eines Entlüftungsschlitzes innerhalb des Negativ-Profilelementes.

In einer der vorgenannten Ausführungsform alternativen Ausführung enden die beiden Enden eines Entlüftungsschlitzes außerhalb des Negativ-Profilelementes in den das Negativ-Profilelement begrenzenden Negativ-Rillen.

Zweckmäßig ist es, wenn der Entlüftungsschlitz eine Tiefenerstreckung von 3 mm bis 5 mm aufweist. Ebenso zweckmäßig ist es, wenn der Entlüftungskanal eine Tiefenerstreckung von 10 mm bis 15 mm aufweist. Somit entspricht das Entlüftungskonzept der durchschnittlichen geometrischen Anforderung eines Formsegments bezüglich der Dicke.

Die Erfindung betrifft ebenfalls ein Verfahren zur Herstellung einer vorbeschriebenen Vulkanisierform nach Anspruch 16, bei dem man die Formflächen durch das Selektive Laserschmelzen herstellt. Durch das generative Fertigungsverfahren der Gruppe der Strahlschmelzverfahren wird üblicherweise Metallpulver in einer dünnen Schicht auf eine Grundplatte aufgebracht. Das Metallpulver wird mittels Laserstrahlung lokal vollständig umgeschmolzen und bildet nach seiner Erstarrung eine feste Materialschicht. Vorteilhaft ist es, wenn man die Entlüftungsmittel, insbesondere die Entflüftungsschlitze sowie die Lamellenbleche gleichzeitig durch das Selektive Laserschmelzverfahren mit aufbaut.

Weitere Merkmale, Vorteile und Einzelheiten der Erfindung werden anhand der Zeichnungen, die schematische Ausführungsbeispiele darstellen, näher erläutert. Es zeigen die:
- Fig. 1: eine segmentierte Vulkanisierform mit Formsegmenten;
- Fig. 2: eine Aufsicht auf die Formfläche eines Formsegmentes einer erfindungsgemäßen Vulkanisierform;
- Fig. 3: einen Querschnitt eines Entlüftungsschlitzes samt Entlüftungskanal entlang des Schnittes A-A der Fig. 2;
- Fig. 4: einen Längsschnitt des Entlüftungsschlitzes samt Entlüftungskanal der Fig. 3 entlang des Schnittes B-B der Fig. 2;
- Fig. 5: einen Längsschnitt eines anderen Entlüftungsschlitzes samt Entlüftungskanales.

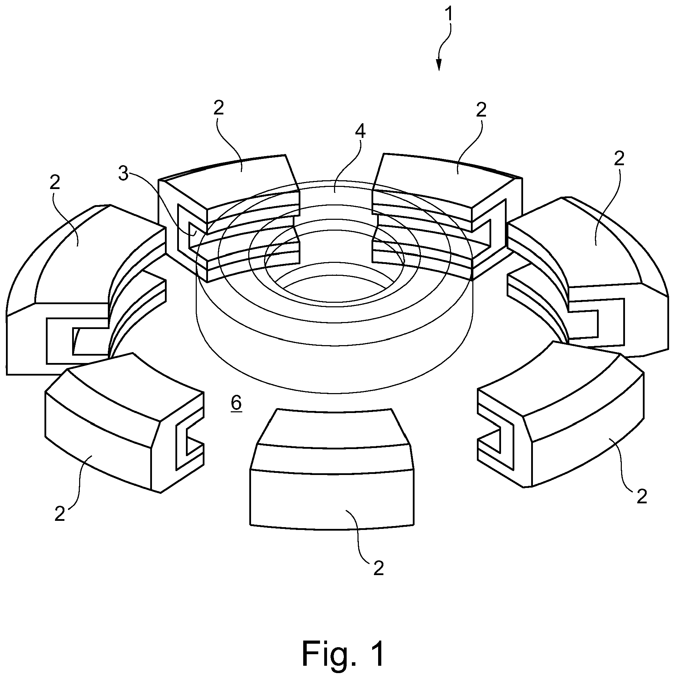

In der **Fig.1** ist eine vereinfachte schematische Darstellung einer segmentierten Vulkanisierform 1 für Fahrzeugreifen 4 mit mehreren, zu einer umfangsmäßig geschlossenen Form zusammenfügbaren Formsegmenten 2 dargestellt. Die Formsegmente 2 sind radial verfahrbar und bilden radial innen einen Formenhohlraum 6. Die Formsegmente 2 weisen innenseitig Formflächen 3 auf. Die Formsegmente 2 weisen weiterhin Entlüftungsmittel (nicht dargestellt) auf, welche mit der Atmosphäre in Verbindung stehen und durch welche Gas aus dem Formenhohlraum 6 der Vulkanisierform 1 durch das Formsegment 2 hindurch nach außen ausleitbar ist.

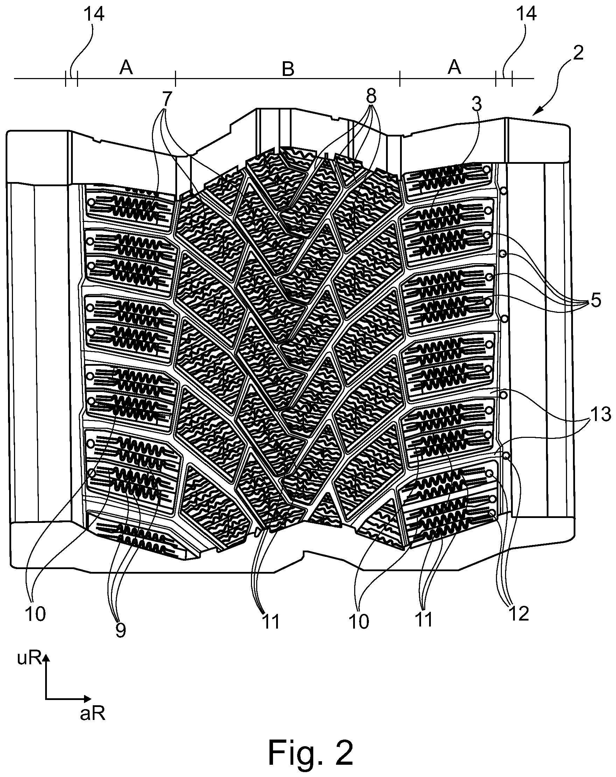

Die **Fig. 2** zeigt eine Aufsicht auf die Formfläche 3 eines Formsegmentes 2 einer erfindungsgemäßen Vulkanisierform.

Die Formfläche 3 weist ein Negativ-Laufstreifenprofil mit Negativ-Profilelementen 7 zur Formung des Positiv-Laufstreifenprofils mit Positiv-Profilelementen des zu vulkanisierenden Fahrzeugreifens auf. Die Negativ-Rillen 8 bilden in der Formfläche 2 des Formsegmentes Stege. Die hier gezeigte Formfläche 3 ist die eines Winterreifens. Innerhalb der Negativ-Profilelemente 7 sind Lamellenbleche 9 angeordnet, welche die Feineinschnitte des heizzupressenden Reifens formen. Die Lamellenbleche 9 queren das Negativ-Profilelement 7.

In den Schulter-Negativ-Profilelementen 10 sind sowohl Entlüftungsschlitze 11 als auch zusätzlich zylindrische Entlüftungsmittel 12 wie beispielweise Eurovents angeordnet, die axial außen in Bezug auf die Entlüftungsschlitze 11 und teilweise von diesem beabstandet oder unmittelbar an diese anschließend, angeordnet sind. Die Schulter-Negativ-Profilelemente 10 sind in einer umlaufenden Reihe hintereinander angeordnet und dieser Anordnungsbereich ist mit dem Buchstaben A gekennzeichnet. Die zylindrischen Entlüftungsmittel 12 sind sowohl innerhalb des Schulter-Negativ-Profilelementes 10 auf einer gedachten Verlängerungslinie der Längserstreckung des Entlüftungsschlitzes 11 angeordnet; andererseits sind weitere zylindrische Entlüftungsmittel 12 axial außen (außerhalb) in Bezug auf eine Querrille 13 in deren Mündung im TWI-Bereich 14 des Reifens angeordnet. Alle axial innen in Bezug auf die Schulter-Negativ-Profilelemente 10 angeordneten Entlüftungsmittel 5 in einem mittigen Laufstreifenprofilbereich, der mit dem Buschstaben B gekennzeichnet ist, sind ausschließlich Entlüftungsschlitze 11 in den Formflächen 2 der Inneren-Negativ-Profilelemente 15 angeordnet. Es sind wenigstens zwei Entlüftungsschlitze 11 in einem Negativ-Profilelement 7 angeordnet. Die Entlüftungsschlitze 11 verlaufen in etwa quer zur Umfangsrichtung uR und parallel zueinander. Die Entlüftungsschlitze 11 sind zwischen den Lamellenblechen 9 und parallel zu diesen angeordnet. Die Oberfläche der Entlüftungsschlitze 11 eines Negativ-Profilelementes 7 beträgt etwa 5-15 % der Oberfläche des Negativ-Profilelementes 7.

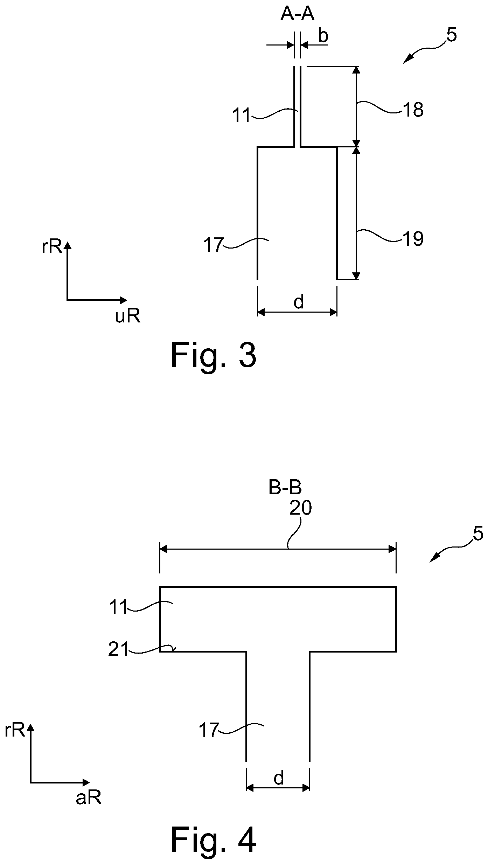

Die **Fig. 3** zeigt einen Querschnitt eines Entlüftungsschlitzes 11 samt Entlüftungskanal 17 entlang des Schnittes A-A der Fig. 2, während die **Fig. 4** den entsprechenden Längsschnitt zeigt. Der Entlüftungsschlitz 11 weist eine Breite b von 25 µm bis 70 µm, vorzugsweise von 30 µm bis 60 µm auf. Der Entlüftungsschlitz 11 mündet in den Entlüftungskanal 17, dessen Querschnittsfläche rund ist und größer als die Querschnittsfläche des Entlüftungsschlitzes 11 ist. Der Durchmesser d des Entlüftungskanales 17 beträgt zwischen 2 mm und 3 mm.

Der Entlüftungsschlitz 11 weist eine radiale Tiefenerstreckung 18 von 3 mm bis 5 mm und der Entlüftungskanal 17 weist eine radiale Tiefenerstreckung 19 von 10 mm bis 15 mm auf. Über die Längserstreckung 20 des Entlüftungsschlitzes 11 und über seine Tiefenerstreckung 18 bleibt die Breite b gleich. Die Längserstreckung 20 beträgt zwischen 10 mm und 40 mm.

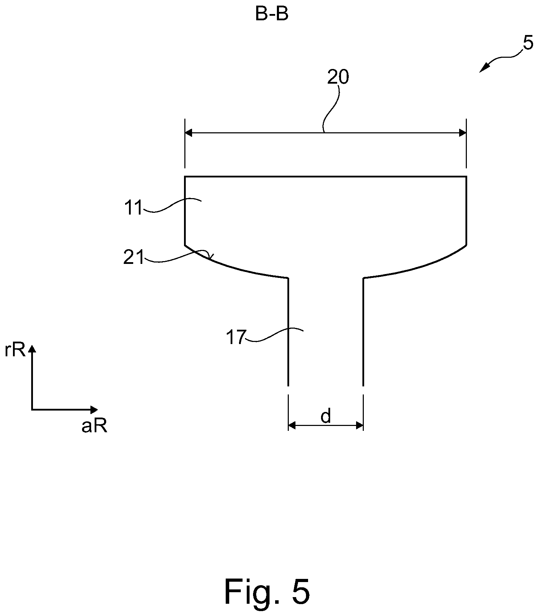

Die **Fig. 5** zeigt einen Längsschnitt eines anderen Entlüftungsschlitzes 11 samt Entlüftungskanales 17. Der Längsschnitt dieses Entlüftungsmittels 5 unterscheidet sich von dem der Fig. 4 darin, dass die untere Fläche des Entlüftungsschlitzes 21 trichterförmig in den Entlüftungskanal 17 übergeht, während die untere Fläche des Entlüftungsschlitzes 21 der Fig. 4 in axialer Richtung aR verlaufend ausgebildet ist.

### Bezugszeichenliste

### (Teil der Beschreibung)

- 1: Vulkanisierform
- 2: Formsegment
- 3: Formfläche
- 4: Fahrzeugreifen
- 5: Entlüftungsmittel
- 6: Formenhohlraum
- 7: Negativ-Profilelement
- 8: Negativ-Rille
- 9: Lamellenblech
- 10: Schulter-Negativ-Profilelement
- 11: Entlüftungsschlitz
- 12: Zylindrisches Entlüftungsmittel
- 13: Querrille
- 14: TWI-Bereich
- 15: Inneres-Negativ-Profilelement
- 17: Entlüftungskanal
- 18: Radiale Tiefenerstreckung des Entlüftungsschlitzes
- 19: Radiale Tiefenerstreckung des Entlüftungskanals
- 20: Längserstreckung des Entlüftungsschlitzes
- 21: Untere Fläche des Entlüftungsschlitzes
- b: Breite Entlüftungsschlitz
- d: Durchmesser Entlüftungskanal
- rR: radiale Richtung
- aR: axiale Richtung
- uR: Umfangsrichtung

## Patentansprüche

1. Vulkanisierform (1) für Winter- oder Allseason-Fahrzeugreifen (4), welche innenseitig Formflächen (3) mit einem Negativ-Laufstreifenprofil mit Negativ-Profilelementen (7) zur Formung des Positiv-Laufstreifenprofils mit Positiv-Profilelementen des zu vulkanisierenden Fahrzeugreifens (4) aufweist, wobei in den Negativ-Profilelementen (7) Lamellenbleche (9) angeordnet sind, welche in den Positiv-Profilelementen des zu vulkanisierenden Fahrzeugreifens (4) Feineinschnitte erzeugen und wobei innerhalb eines Schulter-Negativ-Profilelementes (10) wenigstens ein Entlüftungsschlitz (11) als Entlüftungsmittel (5) angeordnet ist, wobei dieser Entlüftungsschlitz (11) parallel und beabstandet zu einem in diesem Schulter-Negativ-Profilelement (10) angeordneten Lamellenblech (9) verläuft und wobei nur axial außen in Bezug auf diesen Entlüftungsschlitz (11) zusätzlich wenigstens ein zylindrisches Entlüftungsmittel (12) angeordnet ist.

2. Vulkanisierform (1) nach Anspruch 1, **dadurch gekennzeichnet, dass** das zylindrische Entlüftungsmittel (12) innerhalb des Schulter-Negativ-Profilelementes (10) auf einer gedachten Linie, welche eine Verlängerung der Längserstreckung des Entlüftungsschlitzes (11) ist, angeordnet ist.

3. Vulkanisierform (1) nach einem oder mehreren der vorangehenden Ansprüche, **dadurch gekennzeichnet, dass** das zylindrische Entlüftungsmittel (12) axial außen in Bezug auf das Schulter-Negativ-Profilelement (10) angeordnet ist.

4. Vulkanisierform (1) nach Anspruch 3, **dadurch gekennzeichnet, dass** das zylindrische Entlüftungsmittel (12) axial außen in Bezug auf eine Querrille (13) in deren Mündung im TWI-Bereich (14) angeordnet ist.

5. Vulkanisierform (1) nach einem oder mehreren der vorangehenden Ansprüche, **dadurch gekennzeichnet, dass** die axial innen in Bezug auf die Schulter-Negativ-Profilelemente (10) angeordneten Negativ-Profilelemente (15) ausschließlich Entlüftungsschlitze (11) als Entlüftungsmittel (5) aufweisen.

6. Vulkanisierform (1) nach einem oder mehreren der vorangehenden Ansprüche, **dadurch gekennzeichnet, dass** das zylindrische Entlüftungsmittel (12) ein entgegen der Kraft einer Feder verschließbares Ventil oder ein Minivent ist.

7. Vulkanisierform (1) nach einem oder mehreren der vorangehenden Ansprüche, **dadurch gekennzeichnet, dass** der Entlüftungsschlitz (11) eine Breite (b) von 25 µm bis 70 µm, vorzugsweise von 30 µm bis 60 µm aufweist.

8. Vulkanisierform (1) nach einem oder mehreren der vorangehenden Ansprüche, **dadurch gekennzeichnet, dass** der Entlüftungsschlitz (11) eine Länge (20) von 10 mm bis 40 mm aufweist.

9. Vulkanisierform (1) nach einem oder mehreren der vorangehenden Ansprüche, **dadurch gekennzeichnet, dass** ein Entlüftungsschlitz (11) zwischen zwei Lamellenblechen (9) angeordnet sind, wobei sich vorzugsweise ein Entlüftungsschlitz (11) mit einem Lamellenblech (9) abwechseln.

10. Vulkanisierform (1) nach einem oder mehreren der vorangehenden Ansprüche, **dadurch gekennzeichnet, dass** der Entlüftungsschlitz (11) in radialer Richtung (rR) - in einen Entlüftungskanal (17) mündet, dessen Querschnittsfläche größer als die Querschnittsfläche des Entlüftungsschlitzes (11) ist und dessen Durchmesser (d) 2 mm bis 3 mm beträgt.

11. Vulkanisierform (1) nach einem oder mehreren der vorangehenden Ansprüche, **dadurch gekennzeichnet, dass** der Entlüftungsschlitz (11) über seine Längserstreckung (20), vorzugsweise über seine Längserstreckung (20) und über seine Tiefenerstreckung (18), die gleiche Breite (b) aufweist.

12. Vulkanisierform (1) nach einem oder mehreren der vorangehenden Ansprüche, **dadurch gekennzeichnet, dass** die beiden Enden eines Entlüfungsschlitzes (11) innerhalb des Negativ-Profilelementes (7) enden.

13. Vulkanisierform (1) nach einem oder mehreren der vorangehenden Ansprüche 1 bis 10, **dadurch gekennzeichnet, dass** die beiden Enden eines Entlüftungsschlitzes (11) außerhalb des Negativ-Profilelementes (7) in den das Negativ-Profilelement begrenzenden Negativ-Rillen (8) enden.

14. Vulkanisierform (1) nach einem oder mehreren der vorangehenden Ansprüche, **dadurch gekennzeichnet, dass** der Entlüftungsschlitz (11) eine Tiefenerstreckung (18) von 3 mm bis 5 mm aufweist.

15. Vulkanisierform (1) nach einem oder mehreren der vorangehenden Ansprüche, **dadurch gekennzeichnet, dass** der Entlüftungskanal (17) eine Tiefenerstreckung (19) von 10 mm bis 15 mm aufweist.

16. Verfahren zur Herstellung einer Vulkanisierform (1) nach einem oder mehreren der Ansprüche 1 - 15, **dadurch gekennzeichnet, dass** man die Formflächen (3) durch das Selektive Laserschmelzen herstellt.

## Claims

1. Vulcanizing mold (1) for winter or all-season vehicle tires (4), which vulcanizing mold has, on the inner side, mold surfaces (3) with a negative tread profile with negative profile elements (7) for the formation of the positive tread profile with positive profile elements of the vehicle tire (4) to be vulcanized, wherein, in the negative profile elements (7), there are arranged lamellar plates (9) which generate sipes in the vehicle tire (4) to be vulcanized, and wherein, within a shoulder negative profile element (10), there is arranged at least one ventilation slot (11) as ventilation means (5), wherein said ventilation slot (11) runs parallel to and spaced apart from a lamellar plate (9) arranged in said shoulder negative profile element (10), and wherein at least one cylindrical ventilation means (12) is additionally arranged only axially at the outside in relation to said ventilation slot (11).

2. Vulcanizing mold (1) according to Claim 1, **characterized in that** the cylindrical ventilation means (12) is arranged within the shoulder negative profile element (10) on an imaginary line which is an elongation of the longitudinal extent of the ventilation slot (11).

3. Vulcanizing mold (1) according to one or more of the preceding claims, **characterized in that** the cylindrical ventilation means (12) is arranged axially at the outside in relation to the shoulder negative profile element (10).

4. Vulcanizing mold (1) according to Claim 3, **characterized in that** the cylindrical ventilation means (12) is arranged axially at the outside in relation to a transverse channel (13), at the opening-out point thereof in the TWI region (14).

5. Vulcanizing mold (1) according to one or more of the preceding claims, **characterized in that** the negative profile elements (15) arranged axially at the inside in relation to the shoulder negative profile elements (10) have exclusively ventilation slots (11) as ventilation means (5).

6. Vulcanizing mold (1) according to one or more of the preceding claims, **characterized in that** the cylindrical ventilation means (12) is a valve or a mini-vent which is closable counter to the force of a spring.

7. Vulcanizing mold (1) according to one or more of the preceding claims, **characterized in that** the ventilation slot (11) has a width (b) of 25 *µ*m to 70 *µ*m, preferably of 30 *µ*m to 60 *µ*m.

8. Vulcanizing mold (1) according to one or more of the preceding claims, **characterized in that** the ventilation slot (11) has a length (20) of 10 mm to 40 mm.

9. Vulcanizing mold (1) according to one or more of the preceding claims, **characterized in that** a ventilation slot (11) is arranged between two lamellar plates (9), wherein a ventilation slot (11) and a lamellar plate (9) preferably alternate.

10. Vulcanizing mold (1) according to one or more of the preceding claims, **characterized in that** the ventilation slot (11) opens out, in a radial direction (rR), into a ventilation duct (17), the cross-sectional area of which is larger than the cross-sectional area of the ventilation slot (11) and the diameter (d) of which is 2 mm to 3 mm.

11. Vulcanizing mold (1) according to one or more of the preceding claims, **characterized in that** the ventilation slot (11) has the same width (b) over its longitudinal extent (20), preferably over its longitudinal extent (20) and over its depth extent (18) .

12. Vulcanizing mold (1) according to one or more of the preceding claims, **characterized in that** the two ends of a ventilation slot (11) end within the negative profile element (7).

13. Vulcanizing mold (1) according to one or more of the preceding Claims 1 to 10, **characterized in that** the two ends of a ventilation slot (11) end outside the negative profile element (7) in the negative channels (8) that delimit the negative profile element.

14. Vulcanizing mold (1) according to one or more of the preceding claims, **characterized in that** the ventilation slot (11) has a depth extent (18) of 3 mm to 5 mm.

15. Vulcanizing mold (1) according to one or more of the preceding claims, **characterized in that** the ventilation duct (17) has a depth extent (19) of 10 mm to 15 mm.

16. Method for producing a vulcanizing mold (1) according to one or more of Claims 1 - 15, **characterized in that** the mold surfaces (3) are produced by selective laser melting.

## Revendications

1. Moule de vulcanisation (1) pour pneumatiques toutes saisons ou d'hiver (4), qui présente, du côté intérieur, des surfaces de moule (3) avec un profil de bande de roulement négatif avec des éléments profilés négatifs (7) pour former le profil de bande de roulement positif avec des éléments profilés positifs du pneumatique (4) à vulcaniser, des lamelles en tôle (9) étant disposées dans les éléments profilés négatifs (7), lesquelles produisent de fines entailles dans les éléments profilés positifs du pneumatique (4) à vulcaniser, et au moins une fente de désaérage (11) en tant que moyen de désaérage (5) étant disposée à l'intérieur d'un élément profilé négatif d'épaulement (10), cette fente de désaérage (11) s'étendant parallèlement à et à distance d'une lamelle en tôle (9) disposée dans cet élément profilé négatif d'épaulement (10) et au moins un moyen de désaérage cylindrique (12) étant en outre disposé seulement axialement à l'extérieur par rapport à cette fente de désaérage (11) .

2. Moule de vulcanisation (1) selon la revendication 1, **caractérisé en ce que** le moyen de désaérage cylindrique (12) est disposé à l'intérieur de l'élément profilé négatif d'épaulement (10) sur une ligne imaginaire qui constitue un prolongement de l'étendue longitudinale de la fente de désaérage (11).

3. Moule de vulcanisation (1) selon l'une quelconque ou plusieurs des revendications précédentes, **caractérisé en ce que** le moyen de désaérage cylindrique (12) est disposé axialement à l'extérieur par rapport à l'élément profilé négatif d'épaulement (10).

4. Moule de vulcanisation (1) selon la revendication 3, **caractérisé en ce que** le moyen de désaérage cylindrique (12) est disposé axialement à l'extérieur par rapport à une rainure transversale (13) dans son embouchure dans la région TWI (14).

5. Moule de vulcanisation (1) selon l'une quelconque ou plusieurs des revendications précédentes, **caractérisé en ce que** les éléments profilés négatifs (15) disposés axialement à l'intérieur par rapport aux éléments profilés négatifs d'épaulement (10) présentent exclusivement des fentes de désaérage (11) en tant que moyen de désaérage (5).

6. Moule de vulcanisation (1) selon l'une quelconque ou plusieurs des revendications précédentes, **caractérisé en ce que** le moyen de désaérage cylindrique (12) est une soupape ou un mini-vent pouvant être fermé (e) à l'encontre de la force d'un ressort.

7. Moule de vulcanisation (1) selon l'une quelconque ou plusieurs des revendications précédentes, **caractérisé en ce que** la fente de désaérage (11) présente une largeur (b) de 25 *µ*m à 70 *µ*m, de préférence de 30 *µ*m à 60 *µ*m.

8. Moule de vulcanisation (1) selon l'une quelconque ou plusieurs des revendications précédentes, **caractérisé en ce que** la fente de désaérage (11) présente une longueur (20) de 10 à 40 mm.

9. Moule de vulcanisation (1) selon l'une quelconque ou plusieurs des revendications précédentes, **caractérisé en ce qu'**une fente de désaérage (11) est disposée entre deux lamelles en tôle (9), une fente de désaérage (11) alternant de préférence avec une lamelle en tôle (9).

10. Moule de vulcanisation (1) selon l'une quelconque ou plusieurs des revendications précédentes, **caractérisé en ce que** la fente de désaérage (11) débouche dans la direction radiale (rR) dans un canal de désaérage (17) dont la surface en section transversale est supérieure à la surface en section transversale de la fente de désaérage (11) et dont le diamètre (d) mesure 2 mm à 3 mm.

11. Moule de vulcanisation (1) selon l'une quelconque ou plusieurs des revendications précédentes, **caractérisé en ce que** la fente de désaérage (11) présente la même largeur (b) sur son étendue longitudinale (20), de préférence sur son étendue longitudinale (20) et sur son étendue en profondeur (18).

12. Moule de vulcanisation (1) selon l'une quelconque ou plusieurs des revendications précédentes, **caractérisé en ce que** les deux extrémités d'une fente de désaérage (11) se terminent à l'intérieur de l'élément profilé négatif (7).

13. Moule de vulcanisation (1) selon l'une quelconque ou plusieurs des revendications précédentes 1 à 10, **caractérisé en ce que** les deux extrémités d'une fente de désaérage (11) se terminent à l'extérieur de l'élément profilé négatif (7) dans les rainures négatives (8) délimitant l'élément profilé négatif.

14. Moule de vulcanisation (1) selon l'une quelconque ou plusieurs des revendications précédentes, **caractérisé en ce que** la fente de désaérage (11) présente une étendue en profondeur (18) de 3 mm à 5 mm.

15. Moule de vulcanisation (1) selon l'une quelconque ou plusieurs des revendications précédentes, **caractérisé en ce que** le canal de désaérage (17) présente une étendue en profondeur (19) de 10 mm à 15 mm.

16. Procédé de fabrication d'un moule de vulcanisation (1) selon l'une quelconque ou plusieurs des revendications 1 à 15, **caractérisé en ce que** l'on fabrique les surfaces du moule (3) par fusion laser sélective.
